# FASCICULE DE BREVET EUROPEEN

(11) **EP 0 399 882 B1**
(45) Date de publication et mention de la délivrance du brevet: **07.04.1993**
(21) Numéro de dépôt: 90401333.1
(22) Date de dépôt: 18.05.1990
(51) Int. Cl.: B62D 65/00, B60T 7/08

(54) **Procédé de mise en place sur un véhicule automobile, d'un frein à main, et système pour la mise en oeuvre de ce procédé**
Verfahren zum Einbauen einer Handbremse in ein Automobil und System zur Durchführung dieses Verfahrens
Method for mounting a hand brake on an automobile and system for use of this method

(30) Priorité: 23.05.1989 FR 8906736
(43) Date de publication de la demande: 28.11.1990
(73) Titulaire: AUTOMOBILES PEUGEOT, 75116 Paris (FR); AUTOMOBILES CITROEN, 92200 Neuilly-sur-Seine (FR)
(72) Inventeur: Clement, Daniel, F-78170 La Celle Saint Cloud (FR)
(74) Mandataire: Berger, Helmut

(56) Documents cités:
- CA-A- 1 046 125
- DE-A- 3 214 955
- PATENT ABSTRACTS OF JAPAN vol. 5, no. 183 (M-97)(855) 21 novembre 1981, & JP-A-56 103665 (HONDA) 18 août 1981,

## Description

L'invention concerne un procédé de mise en place sur un véhicule automobile, d'un frein à main comportant un levier de frein articulé à un support fixé au plancher de la caisse du véhicule au droit d'une ouverture dans ce plancher, traversée par la partie inférieure du levier, et relié par des moyens de liaison tels qu'un câble aux organes de freinage du véhicule, ainsi qu'un système pour la mise en oeuvre de ce procédé.

Selon les procédés et systèmes connus, de ce type, on effectue la connexion du ou des câbles allant par exemple au train arrière après assemblage de la caisse du véhicule. Le réglage du frein est ensuite réalisé sous le véhicule.

Les procédés connus présentent les inconvénients majeurs de ne pas être automatisables et d'être effectués en deux temps. Une première opération de montage, celui du levier, se fait à l'intérieur du véhicule. Les deux autres opérations, à savoir la connexion au train arrière et le réglage du frein, sont effectués dans des conditions de travail malaisées sous le véhicule.

La présente invention a pour but de proposer un procédé et un système de mise en place d'un frein à main, qui ne présentent pas les inconvénients susmentionnés de l'état de la technique.

Pour atteindre ce but, le procédé selon l'invention est caractérisé en ce que l'on monte le support auquel est articulé le levier sur un chariot d'assemblage destiné au positionnement d'organes devant prendre place sous la caisse du véhicule dans leurs positions relatives d'assemblage à la caisse, on connecte le levier aux moyens de liaison susmentionnés, on effectue le réglage du frein, on amène le levier dans une position sensiblement verticale, on descend la caisse préalablement placée au-dessus du chariot de façon que le levier puisse passer à travers l'ouverture précitée dans le plancher de la caisse du véhicule et on fixe le support audit plancher.

Le système pour la mise en oeuvre du procédé est caractérisé en ce qu'il comporte, sur le chariot d'assemblage, un dispositif de positionnement du frein par rapport à la caisse et en ce que le support de frein et le plancher de la caisse comportent des moyens complémentaires d'engagement mutuel, adaptés pour assurer le positionnement relatif correct du frein sur la caisse.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :
- la figure 1 est une vue schématique destinée à illustrer la mise en place d'un frein à main selon la présente invention ;
- les figures 2 et 3 sont des vues en élévation d'un frein à main et du système pour sa mise en place, selon la présente invention, illustrant deux phases successives de cette mise en place ;
- la figure 4 est une vue en direction de la flèche IV de la figure 3, le support de positionnement ayant été supprimé ; et
- la figure 5 est une vue à plus grande échelle du détail indiqué en V de la figure 2.

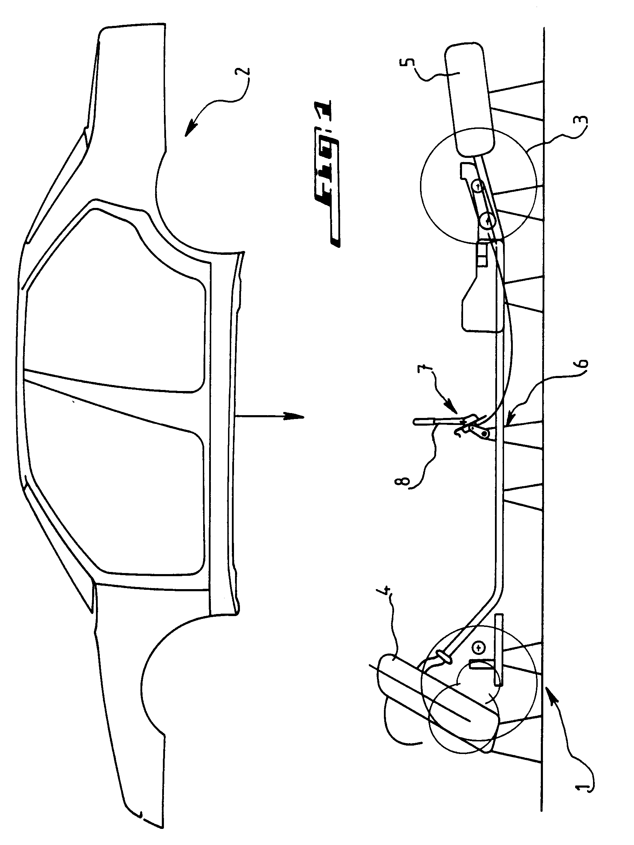

La figure 1 montre en 1 un chariot d'assemblage permettant le positionnement des différents organes qui prendront place sous la caisse 2, tels que par exemple les roues 3, le moteur 4 et la roue de secours 5. Le chariot d'assemblage comprend un dispositif de positionnement 6 du frein à main indiqué en 7. A la figure 1 le levier du frein est montré dans sa position sensiblement verticale permettant la descente de la caisse 2 du véhicule dans sa position d'assemblage aux différents organes positionnés sur le chariot 1.

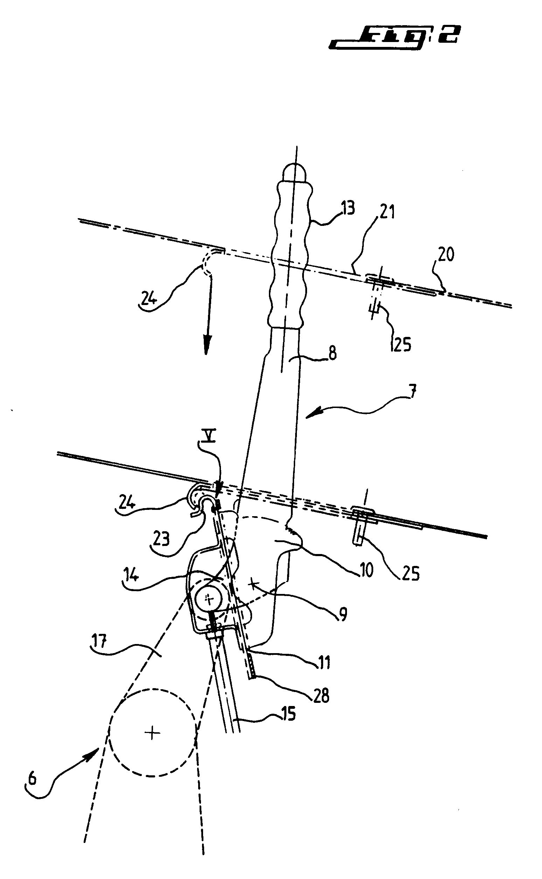

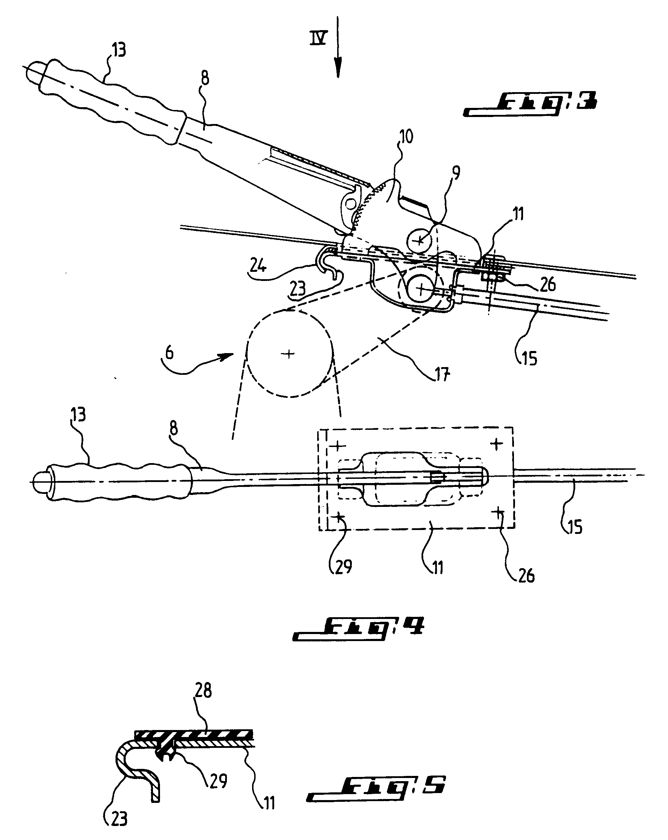

En se reportant aux figures 2 à 5, on décrira ci-après plus en détail la mise en place du frein à main sous le plancher de la caisse du véhicule et le système utilisé à cette fin.

Comme on le voit notamment à la figure 2, le frein à main 7 comprend essentiellement un levier 8 qui est monté pivotant autour d'un axe 9 sur un support 10 fixé à une platine 11. Le levier 8 est réalisé sous forme d'un levier à deux bras, le bras plus long étant conformé à son extrémité en poignée d'actionnement 13 du frein, tandis qu'à l'extrémité du bras plus court 14 est fixé le câble 15 qui connecte le frein 7 aux organes de freinage associés par exemple au train arrière du véhicule. Comme le montrent les figures, le bras 14 du levier de frein 8 comporte en outre des moyens de montage amovible, non particulièrement représentés mais situés au niveau de la fixation du câble 15, à un bras pivotant 17 du dispositif de support et de positionnement 6 du chariot d'assemblage 1.

Pour permettre la mise en place du frein 7 au plancher désigné par la référence 20 de la caisse 2, on a pratiqué dans le plancher une ouverture 21 dimensionnée de façon à permettre le passage du levier 8 et de son support 10 lors de la descente de la caisse, comme cela ressort des figures.

Pour assurer le positionnement correct du frein à main 7 par rapport au plancher 20, le bord de la platine, de forme générale rectangulaire (figure 4) et qui se trouve en hauteur lorsque le levier est dans sa position verticale, est recourbé et constitue un élément d'accrochage au plancher 20 qui est pourvu à cette fin au niveau de l'ouverture 21 d'une patte courbe 24.

Comme le montrent les figures 2 et 3, le rebord recourbé d'accrochage 23 et la patte courbe 24 sont disposés de telle façon que le rebord 23 puisse s'engager dans la patte 24 lors de la descente de la caisse 2 et que la platine 11 pivote de la position d'engagement montrée à la figure 2 jusqu'à sa position définitive sous le plancher 20 où elle sera fixée à l'aide de deux éléments filetés 25 prévus sur le plancher 20 à l'aide de deux écrous 26 (figure 3). La surface supérieure de la platine 11 porte un élément d'étanchéité 28, par exemple en caoutchouc, qui est fixé à la platine au niveau du rebord recourbé 23 par des tétons 29, comme le montre la figure 4. Au côté opposé, l'élément d'étanchéité est enserré par les écrous 26 entre le plancher 20 et la platine 11. Cet élément 28 assure l'étanchéité entre l'habitacle du véhicule et le dessous du tunnel formé usuellement au milieu du plancher.

En utilisant le système qui vient d'être décrit, la mise en place sur le véhicule automobile du frein à main 7 se déroule de la manière suivante :

Le levier 8 du frein 7 est assemblé à la platine de support 11 et connecté au câble 15. Cet ensemble est positionné sur le dispositif de positionnement 6 du chariot d'assemblage 1. Puis on effectue le réglage du frein. Ce réglage peut être fait, de façon connue en soi, au niveau d'un palonnier reliant le câble 15 à deux autres câbles (non représentés) respectivement reliés aux organes de freinage des deux roues arrière, ou au niveau de ces roues.

Après le positionnement et le réglage du frein 7, on descend la caisse jusqu'à l'engagement de la partie d'accrochage 23 de la platine 11 dans la patte courbe 24 du plancher 20, le levier 8 et la platine 11 ayant été préalablement placés sensiblement verticalement, comme cela est indiqué à la figure 2. La mise en place définitive du frein à main s'opère par pivotement de la plaque 11 avec rotation du rebord 23 dans la patte 24. La fixation de la plaque 10 sous le plancher est assurée par l'engagement mutuel des parties 23 et 24 et par les écrous 26. Bien entendu, après le positionnement correct du frein à main sur le plancher 20, on sépare le frein du dispositif de support 6 du chariot 1.

La mise en place du frein à main, selon l'invention, présente un grand nombre d'avantages par rapport à l'état de la technique :

Cette mise en place peut être réalisée automatiquement. Il s'agit d'un montage à poste fixe hors ligne, des organes constituant le frein à main, à savoir le levier, la platine et le câble. La connexion du câble au train arrière est effectuée avant la descente de la caisse. Le réglage est également accompli avant la descente de cette dernière dans des conditions de travail aisées assurant par exemple une bonne accessibilité aux organes sur le chariot avant la descente de la caisse. La vérification du fonctionnement de l'ensemble peut être faite avant la descente de la caisse, donc hors de l'habitacle. Aucune opération ne doit être effectuée à l'intérieur du véhicule. Le montage s'effectue entièrement en dessous. L'orifice de passage 21 au travers du plancher 20 est très réduit. Par conséquent la caisse n'est pas affaiblie et on obtient aisément une bonne étanchéité.

## Revendications

1. Procédé de mise en place sur un véhicule automobile, d'un frein à main comportant un levier de frein articulé sur un support fixé au plancher de la caisse du véhicule au droit d'une ouverture dans ce plancher, traversée par la partie inférieure du levier, et relié par des moyens de liaison tel qu'un câble aux organes de freinage du véhicule, procédé où l'on monte le support de frein (10) auquel est articulé le levier (8) sur un chariot d'assemblage (1) destiné au positionnement d'organes devant prendre place sous la caisse du véhicule dans leurs positions relatives d'assemblage à la caisse (2), on connecte le frein (7) aux moyens de liaison susmentionnés (15), caractérisé en ce qu'on amène le levier (8) dans une position sensiblement verticale, on descend la caisse (2) préalablement placée au-dessus du chariot de façon que le levier (8) puisse passer à travers l'ouverture (21) précitée et venir en engagement avec un moyen de positionnement (24) solidaire du plancher, puis pivoter avec le support autour dudit moyen de positionnement (24), et on fixe celui-ci audit plancher.

2. Système pour la mise en oeuvre du procédé selon la revendication 1, caractérisé en ce qu'il comporte sur le chariot d'assemblage (1) un dispositif de positionnement (6) du frein (7) par rapport à la caisse (2), et en ce que le support (10) de frein (7) et le plancher (20) de la caisse comportent des moyens complémentaires (23, 24) d'engagement mutuel adaptés pour assurer le susdit pivotement du levier et du support.

3. Système selon la revendication 2, caractérisé en ce que le dispositif de positionnement comprend un organe mobile (17) sur lequel est monté amoviblement le support de frein (10), cet élément de positionnement (17) étant adapté pour permettre le mouvement du frein de sa position d'engagement des moyens complémentaires (23, 24) précités à sa position fixée sous le plancher (20) de la caisse.

4. Système selon la revendication 3, caractérisé en ce que le support (10) est solidaire d'une platine (11) qui comprend à son extrémité située en hauteur lorsque le levier (7) occupe sa position verticale sur le dispositif de positionnement (6), des moyens (23) susceptibles de s'engager lors de la descente de la caisse (2) dans des moyens (24) solidaires du plancher (20) de la caisse, ces moyens (23) et (24) formant les moyens d'engagement mutuels précités.

5. Système selon la revendication 4, caractérisé en ce que les moyens (23) d'engagement mutuel solidaires de la platine (20) sont formés par un rebord recourbé et les moyens complémentaires (24) solidaires du plancher (20) sont formés par une patte courbe qui s'étend en dessous du plancher au bord de l'ouverture (21) de passage du frein (7).

6. Système selon la revendication 5, caractérisé en ce que le plancher présente, au bord opposé à celui portant la patte (24) des moyens de fixation (25) de la platine (11), tels que des vis (25).

7. Système selon l'une des revendications 2 à 6, caractérisé en ce que l'ouverture (21) de passage du frein (7) à travers le plancher (20) présente des dimensions légèrement supérieures au support (10) du frein (7) lorsque la platine (11) est fixée sous le plancher (20).

8. Système selon l'une des revendications 2 à 7, caractérisé en ce que le moyen de liaison avantageusement formé par un câble (15), du levier aux organes de freinage est fixé au levier de frein (8) au niveau du montage amovible du frein sur le dispositif de positionnement (6) du chariot d'assemblage.

## Patentansprüche

1. Verfahren zum Einbau, an einem Kraftfahrzeug, einer, einen Bremshebel aufweisenden Handbremse, der an einem am Boden des Fahrzeugskastens über einer durch den unteren Teil des Hebels durchsetzten Offnung in diesem Boden befestigten Träquer angelenkt und durch Verbindungsmittel, wie ein Kabel, mit den Bremsgliedern des Fahrzeugs verbunden ist, bei welchem Verfahren man den Bremsträger (10), an welchem der Hebel (8) angelenkt ist, an einem für das Positionieren von unterhalb des Fahrzeugskastens in deren relativen Stellungen zum Zusammenfügen mit dem Kasten (2) bestimmten Zusammenbauwagen (1) anordnet, man die Bremse (7) mit den obengenannten Verbindungsmitteln (15) verbindet, dadurch gekennzeichnet, dass man den Hebel (8) in eine etwa senkrechte Stellung bringt, man den vorher oberhalb des Wagens gesetzten Kasten (2) abwärts bewegt, so dass der Hebel (8) durch die vorgenannte Offnung (21) geführt und im Eingriff mit einem mit dem Boden fest verbundenen Positionierungs-Mittel (24) gebracht wird, und dann mit dem Träger um das besagte Positionierungsmittel (24) schwenken kann und man das letztere einen besagten Boden befestigt.

2. System für die Durchführung des Verfahrens nach Anspruch 1, dadurch gekennzeichnet, dass es an dem Zusammenbauwagen (1) eine Vorrichtung (6) zum Positionieren der Bremse (7) im Bezug auf den Kasten (2) aufweist und dass der Träger (10) der Bremse (7) und der Boden (20) des Kastens zu Gewährleistung des obengenannten Schwenkens des Hebels und des Trägers angepasste zusätzliche gegenseitige Eingriffsmittel (23, 24) aufweisen.

3. System nach Anspruch 2, dadurch gekennzeichnet, dass die Positionierungsvorrichtung ein bewegliches Glied (17) aufweist, an welchem der Bremsträger (10) abnehmbar angeordnet ist, wobei dieses Positionierungselement (17) angepasst ist, um die Bewegung der Bremse von ihrer Stellung im Eingriff mit den vorgenannten zusätzlichen Mitteln (23, 24) bis zu ihrer unter dem Boden (20) des Kastens befestigten Stellung zu gestatten.

4. System nach Anspruch 3, dadurch gekennzeichnet, dass der Träger (10) mit einer Platte (11) fest verbunden ist, die an ihrem in der Höhe gelegenen Ende, wenn der Hebel (7) seine senkrechte Stellung an der Positionierungsvorrichtung (6) einnimmt, Mittel (23) aufweist, die fähig sind, sich während der Abwärtsbewegung des Kastens (2) in mit dem Boden (20) des Kastens fest verbundenen Mittel (24) einzuführen, wobei diese Mittel (23) und (24) die vorgenannten gegenseitigen Eingriffsmittel bilden.

5. System nach Anspruch 4, dadurch gekennzeichnet, dass die mit der Platte (20) fest verbundene gegenseitige Eingriffsmittel (23) durch einen umgebogenen Rand und die mit dem Boden (20) fest verbundenen zusätzlichen Mittel (24) durch einen gebogenen Ansatz, der sich unterhalb des Bodens am Rand der Offnung (21) zur Durchführung der Bremse (7) erstreckt, gebildet werden.

6. System nach Anspruch 5, dadurch gekennzeichnet, dass der Boden, an demjenigen Rand, der dem den Ansatz (24) tragenden Rand entgegengesetzt ist, Mittel (25) wie Schrauben (25) zur Befestigung der Platte (11) aufweist.

7. System nach einem der Ansprüche 2 bis 6, dadurch gekennzeichnet, dass die Offnung (21) zur Durchführung der Bremse (7) durch den Boden (20) hindurch etwas grössere Abmessungen als der Träger (10) der Bremse (7) aufweist, wenn die Platte (11) unterhalb des Bodens (20) befestigt ist.

8. System nach einem der Ansprüche 2 bis 7, dadurch gekennzeichnet, dass das vorteilhaft durch einen Kabel (15) gebildete Mittel zur Verbindung des Hebels mit den Bremsgliedern an dem Bremshebel (8) in der Höhe der abnehmbaren Anordnung der Bremse an der Positionierungsvorrichtung (6) des Zusammenbauwagens befestigt ist.

## Claims

1. Method of mounting on an automotive vehicle of a hand brake comprising a brake lever pivoted on a support fastened to the floor of the body of the vehicle plumb with an opening in this floor, through which extends the lower part of the lever and connected by connecting means such as a cable to the brake members of the vehicle, in which method one mounts the brake support (10) to which is pivoted the lever (8) onto an assembling carriage (1) intended for the positioning of members to be placed underneath the body of the vehicle in their relative positions of assembly to the body (2), one connects the brake (7) to the above-mentioned connecting means (15), characterized in that one brings the lever (8) into a substantially vertical position, one lowers the body (2) previously placed above the carriage so that the lever (8) may pass through the aforesaid opening (21) to come in engagement with a positioning means (24) made fast to the floor and then may pivot together with the support about the said positioning means (24) and one fastens the latter to the said floor.

2. System for carrying out the method according to claim 1, characterized in that it comprises on the assembling carriage (1), a device (6) for positioning the brake (7) with respect to the body (2) and in that the support (10) of the brake (7) and the floor (20) of the body comprise complementary mutual engagement means (23, 24) adapted to insure the above-said pivoting of the lever and of the support.

3. System according to claim 2, characterized in that the positioning device comprises a movable member (17) on which is removably mounted the brake support (10), this positioning element (17) being adapted to allow the motion of the brake from its position of engagement with the aforesaid complementary means (23, 24) to its position fastened below the floor (20) of the body.

4. System according to claim 3, characterized in that the support (10) is made fast with a plate (11) which comprises at its end located in height when the lever (7) assumes its vertical position on the positioning means (6), means (23) capable of inserting themselves upon the lowering of the body (2) into means (24) made fast to the floor (20) of the body, these means (23) and (24) forming the aforesaid mutual engagement means.

5. System according to claim 4, characterized in that the mutual engagement means (23) made fast to the plate (20) are formed of a bent edge and the complementary means (24) made fast to the floor (20) are formed of a curved lug which extends below the floor at the edge of the opening (21) for the passage of the brake (7).

6. System according to claim 5, characterized in that the floor exhibits at the edge opposite to that carrying the lug (24), means (25) such as screws (25) for fastening the plate (11).

7. System according to one of claims 2 to 6, characterized in that the opening (21) for the passage of the brake (7) through the floor (20) exhibits dimensions slightly greater than the support (10) of the brake (7) when the plate (11) is fastened underneath the floor (20).

8. System according to one of claims 2 to 7, characterized in that the means advatangeously formed of a cable (15) for the connection of the lever to the braking members is fastened to the brake lever (8) at the level of the removable mounting of the brake onto the positioning device (6) of the assembling carriage.
